# EUROPEAN PATENT APPLICATION

(11) **EP 0 629 836 A1**
(43) Date of publication of application: **21.12.1994**
(21) Application number: 94108521.9
(22) Date of filing: 03.06.1994
(51) Int. Cl.: G01B 15/00, G01B 15/04, G01N 22/02

(54) **Method of inspecting abnormality occurring inside pipe and apparatus for practicing the method**

(30) Priority: 15.06.1993 JP 168550/93; 18.06.1993 JP 172231/93
(71) Applicant: TOKYO GAS CO., LTD., Minato-ku Tokyo 105 (JP)
(72) Inventor: Suyama, Kiichi, Yokohama-shi, Kanagawa (JP); Furusawa, Hajime, Toshima-ku, Tokyo (JP); Hosohara, Yasuharu, Yokohama-shi, Kanagawa (JP); Kobori, Takashi, Yokohama-shi, Kanagawa (JP)
(74) Representative: Schickedanz, Willi, Dipl.-Ing.

(57) **Abstract**

A method of inspecting an abnormality occurring inside a pipe to be inspected and an apparatus for practicing the method, includes the steps of transmitting an electric wave having a predetermined frequency from an antenna of a transmitter located at a predetermined position inside the pipe, receiving the transmitted electric wave by an antenna of a receiver located at a predetermined position inside the pipe, and discriminating the characteristic of the received electric wave. The characteristic of the received electric wave is the intensity of the electric wave, and an attenuation amount is detected in the first example. On theother hand, the characteristic of the received electric waveis a time required to reflect the transmitted electric wave until it is received by the receiver, and a time interval between transmission of the electric wave and reception of the reflected electric wave is measured in the second example.

## Description

### BACKGROUND OF THE INVENTION

### 1. Field of the Invention:

The present invention relates to a method of inspecting abnormality occurring inside a pipe such as a gas pipe.buried underground, and an apparatus for practicing the method.

### 2. Description of the Relevant Arts:

Known conventional methods of inspecting whether a foreign substance such as earth and sand enters into a gas pipe or the like buried underground include a method of inserting an inspection camera into the pipe to pick up the internal state of the pipe and observe the resultant image, thereby judging presence/absence of an abnormality, or a method of inserting a self-propelling robot into a pipe and inspecting the internal state of the pipe (Japanese Patent Laid-Open No. 59-147260). Further, a method of inserting a pig having an outer diameter almost equal to the inner diameter of a pipe to be inspected into the pipe is known. Still further, a method of sending a sound wave into a pipe to be inspected and receiving the reflected sound wave, thereby checking the internal state of the pipe (Japanese Patent Publication No. 51-18836) is known also.

In the above methods, however, when the camera, robot, and the like are used for inspecting the interior of a pipe, they cannot be applied to such a pipe as having a complicated bent shape. In addition, an insertion hole is required to insert the above inspecting means. To prepare the buried pipe for the insertion hole, cumbersome, time-consuming construction works such as digging must be involved. In addition, the inspection distance per cycle is limited to the length of an electric wire or the like connected to the robot or the like. For this reason, when the distance to be inspected is long, the number of inspection cycles are undesirably increased, thereby requiring high cost. When the sound wave is sent into a pipe to inspect the internal state from the reflected sound wave, it is difficult to sense the internal state except that the pipe is completely closed or open to air, and a small change cannot be detected.

### SUMMARY OF THE INVENTION

The present invention has been made in consideration of the above situation, and has as its first object to provide a method of easily inspecting an abnormality occurring inside a pipe such as a gas pipe or the like buried underground, and an apparatus for practicing the method.

The second object of the present invention is to provide a method of easily accurately detecting a position where an abnormality has occurred inside a pipe as an inspection target, and an apparatus for practicing the method.

In order to achieve the above objects, according to a main aspect of the present invention, there is provided a method of inspecting an abnormality occurring inside a pipe to be inspected, comprising the steps of transmitting an electric wave having a predetermined frequency from an antenna of a transmitter located at a predetermined position inside the pipe, receiving the transmitted electric wave by an antenna of a receiver located at a predetermined position inside the pipe, and discriminating a characteristic of the received electric wave.

In order to achieve the first object, according to a second aspect of the present invention, there is provided a method of inspecting an abnormality occurring inside a pipe to be inspected, wherein the characteristic of the received electric wave described in the main aspect to be discriminated is an intensity of the electric wave, an attenuation amount is detected by comparing an intensity of the received electric wave with an intensity of the transmitted electric wave, and it is judged that an abnormality which constricts an inner diameter of the pipe exists inside the pipe when the attenuation amount of the received electric wave becomes more than a predetermined amount.

According to a third aspect of the present invention, there is provided a method of inspecting an abnormality occurring inside a pipe to be inspected, wherein the transmitted electric wave described in the main aspect is received by the antenna of the receiver spaced apart from the antenna of the transmitter by a predetermined distance inside the pipe.

According to a fourth aspect of the present invention, there is provided a method of inspecting an abnormality occurring inside a pipe to be inspected, wherein the attenuation amount of the received electric wave in the second aspect is corrected by an attenuation due to a distance between the antenna of the transmitter and the antenna of the receiver.

Furthermore, in order to achieve the second object, according to a fifth aspect of the present invention, there is provided a method of inspecting an abnormality occurring inside a pipe to be inspected, wherein the characteristic of the received electric wave described in the main aspect to be discriminated is a time required to reflect the transmitted electric wave which is received by the receiver, and a time interval between transmission of the electric wave and reception of the reflected electric wave is measured so as to judge the abnormality occurring inside the pipe and detect a position where the abnormality has occurred.

According to a sixth aspect of the present invention, there is provided a method of inspecting an abnormality occurring inside a pipe to be inspected, wherein the transmitted electric wave described in the fifth aspect is received by an antenna of transceiver having functions of the transmitter and the receiver.

According to a seventh aspect of the present invention, there is provided a method of inspecting an abnormality occurring inside a pipe to be inspected, wherein the transmission of the electric wave and the reception of the reflected electric wave described in the fifth aspect are performed at least twice at different positions, respectively, and a time interval related to each of the reflected electric waves of the second and subsequent times is compared with a time interval related to the reflected electric wave of a first time to judge an abnormality occurrence direction.

According to an eighth aspect of the present invention, there is provided a method of inspecting an abnormality occurring inside a pipe to be inspected, comprising the steps of transmitting an electric wave having a predetermined frequency from an antenna of a transmitter located inside the pipe, receiving the transmitted electric wave by an antenna of a receiver located at a position spaced apart from the transmitter by a predetermined distance, comparing an intensity of the received electric wave with an intensity of the electric wave transmitted from the transmitter, and judging that an abnormality which constricts an inner diameter of the pipe exists inside the pipe when the attenuation amount of the received electric wave becomes more than a predetermined amount.

In order to achieve the first object, according to a ninth aspect, there is provided an apparatus for inspecting an abnormality occurring inside a pipe to be inspected, including a transmitter for transmitting an electric wave having a predetermined frequency from an antenna located inside the pipe, a receiver for receiving the transmitted electric wave by an antenna located at a position spaced apart from the transmitter by a predetermined distance inside the pipe, an amplifier for amplifying the received electric wave, a processing unit for comparing an intensity of the received electric wave with an intensity of the transmitted electric wave and calculating an attenuation amount of the received electric wave, a distance input unit for inputting data of a distance to the processing unit so as to correct the attenuation amount by an attenuation due to the distance between the antenna of the transmitter and the antenna of the receiver, and a display unit for displaying the intensity of the received electric wave.

In order to achieve the second object, according to a tenth aspect, there is provided an apparatus for inspecting an abnormality occurring inside a pipe to be inspected, including a transceiver for transmitting an electric wave having a predetermined frequency inside the pipe and receiving the electric wave reflected by an obstacle existing inside the pipe, and a measuring unit for measuring a time interval between transmission of the electric wave and reception of the reflected electric wave.

As is apparent from the above aspects, according to the present invention, an electric wave having a predetermined frequency is transmitted in a pipe to be inspected, an attenuation amount of an electric wave propagating through the pipe or a time required from transmission of the electric wave to reception of the reflected electric wave is obtained, and an abnormality such as a constriction in diameter occurring inside the pipe and clogging by an obstacle, and the position of the abnormality are inspected by any one of the two values, thereby easily and accurately inspecting the state inside the pipe. In addition, since an electric wave is used, even if a pipe is complicatedly bent, the state inside the pipe can be easily inspected. Since the inspection distance is comparatively set longer, the interior of the pipe can be inspected by a smaller number of inspection cycles over a longer distance.

The above and many other advantages, features and additional objects of the present invention will become manifest to those versed in the art upon making reference to the following detailed description and accompanying drawings in which preferred structural embodiments incorporating the principles of the present invention are shown by way of illustrative example.

### BRIEF DESCRIPTION OF THE DRAWINGS

Fig. 1 is a view for explaining the first example of an inspecting method according to the present invention;
Fig. 2 is a block diagram showing an example of an apparatus for performing the inspecting method shown in Fig. 1;
Fig. 3 is a schematic perspective view showing an experimental apparatus using the inspecting method according to the present invention;
Fig. 4 is a graph showing the results of a comparative experiment and Experiment 1;
Fig. 5 is a graph showing the results of the comparative experiment and Experiment 2;
Fig. 6 is a graph showing the results of the comparative experiment and Experiment 3;
Fig. 7 is a graph showing the results of the comparative experiment and Experiment 4;
Fig. 8 is a table showing the results of Experiment 6;
Fig. 9 is a graph showing the constant ratios of attenuation;
Fig. 10 is a plan view showing a bent pipe used in still another experiment;
Fig. 11 is a graph showing the results of an experiment performed using the bent pipe shown in Fig. 10;
Fig. 12 is a view for explaining the second example of an inspecting method according to the present invention; and
Fig. 13 is a block diagram showing an example of an apparatus for performing the inspecting method shown in Fig. 12.

### DETAILED DESCRIPTION OF THE PREFERRED EMBODIMENTS

The present invention will be described in detail with reference to several preferred examples illustrated in the accompanying drawings.

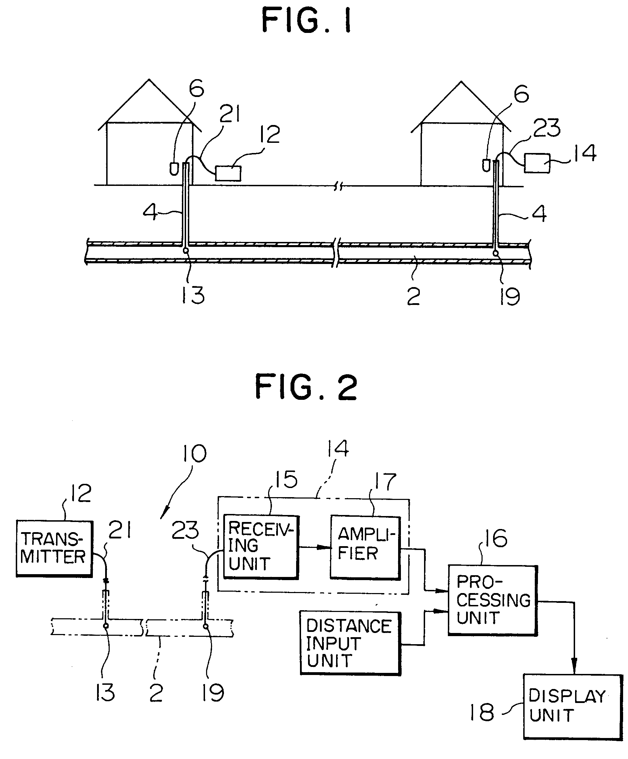

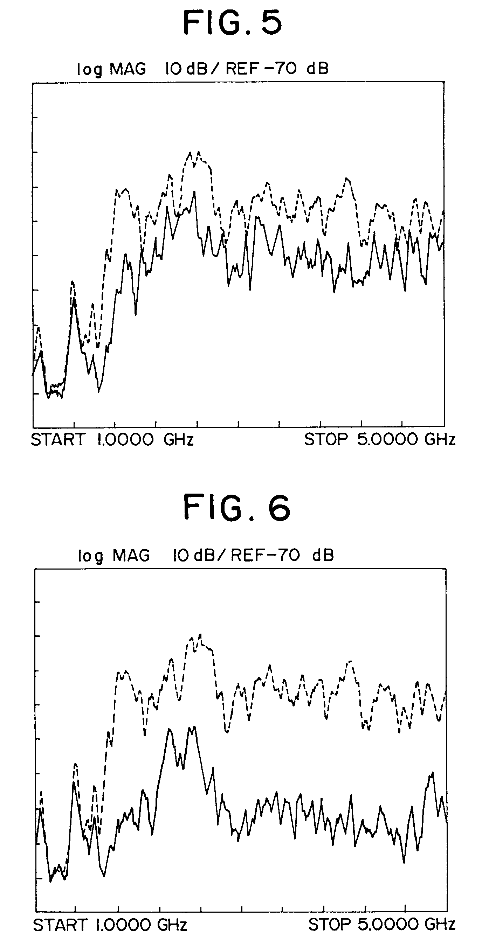

The first example of a method of inspecting an abnormality occurring inside a pipe according to the present invention, and an example of an apparatus for practicing this method will be described with reference to Figs. 1 to 11. Assume that a domestic gas pipe buried underground is used as an inspection target.

The domestic gas pipe is constituted by a trunk gas pipe 2 buried underground and domestic gas pipes 4 branching from the trunk gas pipe 2, and gas-meters 6 are respectively mounted at the end portions of the domestic gas pipes 4 to supply the gas therefrom for domestic use, as shown in Fig. 1.

The following description is related to an inspection for the internal state of the trunk gas pipe 2, and Fig. 2 shows an example of an inspecting apparatus for practicing the inspecting method of the first example. An inspecting apparatus 10 comprises a transmitter 12, a receiver 14, a processing unit 16, and a display unit 18. The transmitter 12 can continuously variably transmit an electric wave having a frequency on the order of GHz. A transmission antenna 13 is mounted at the distal end of a lead wire 21. The receiver 14 comprises a receiving unit 15 and an amplifier 17. A reception antenna 19 is mounted to the distal end of a lead wire 23 extending from the receiving unit 15 in the same manner as in the transmitter 12. Upon reception of the electric wave transmitted from the transmitter 12, the corresponding signal is amplified, and the amplified signal is sent to the processing unit 16.

The processing unit 16 inputs an electric wave received by the receiver 14, and compares the intensity of the received electric wave with the intensity of an electric wave transmitted by the transmitter 12 and input in advance, thereby detecting the attenuation amount of the received electric wave. A distance input unit 20 is connected to the processing unit 16. The setting interval between the antennas 13 and 19 is input from the distance input unit 20, and the attenuation amount is corrected on the basis of a distance input value. More specifically, only an attenuation amount generated upon propagating the wave through the trunk gas pipe 2 between the antennas 13 and 19 is corrected. The corrected attenuation amount is sent to the display unit 18, and the display unit 18 displays this value.

Inspection procedures will be described below. Two gas-meters 6 which interpose a target portion to be inspected are selected. The domestic gas pipes 4 are disconnected from these gas-meters 6, respectively. The antenna 13 of the transmitter 12 is inserted from an opening of one removed domestic gas pipe 4 and is passed until the antenna 13 reaches the interior of the trunk gas pipe 2. This operation may be performed after or before gas supply is interrupted. If gas supply is not interrupted during the inspection, the openings of the domestic gas pipes 4 are sealed to prevent gas leakage.

The antenna 19 of the receiver 14 is inserted from the opening of the domestic gas pipe 4 corresponding to the other domestic meter 6 until the antenna 19 reaches the interior of the trunk gas pipe 2. In this manner, when the antennas 13 and 19 of the transmitter 12 and the receiver 14are located at two sides of the target portion to be inspected of the trunk gas pipe 2, an electric wave having a frequency higher than a value obtained by relation: $\text{f=c/1.706d}$ (where f is a frequency, c is the velocity of light, and d is the inner diameter of a pipe to be inspected) is transmitted from the transmitter 12. For example, if the trunk gas pipe 2 is a 100A pipe, the electric wave has a frequency of 1.67 GHz ormore. The electric wave having a frequency equal to or higher than the frequency obtained by the above relation has a characteristic for allowing the electric wave to propagate with minimum attenuation in a pipe having an inner diameter substituted in the relation.

The electric wave in the predetermined frequency band is transmitted from the transmitter 12 while continuously changing the frequency, and the electric wave propagating through the trunk gas pipe 2 is received by the receiver 14. The received electric wave is sent to the processing unit 16, and the intensity of the received electric wave is compared with the intensity of an electric wave transmitted from the transmitter 12 to detect an attenuation amount. In addition, correction is performed on the basis of the attenuation amount caused by the distance between the antennas 13 and 19 which is input from the distance input unit 20. The resultant value is displayed on the display unit 18, and the internal state of the trunk gaspipe 2 is inspected. More specifically, when water, earth and sand, and the like enter into the trunk gas pipe 2 to constrict the interior of the trunk gas pipe 2, an electric wave received by the receiver 14 is attenuated in accordance with the degree of constriction. For this reason, the substantial attenuation of the electric wave is obtained by the processing unit 16, thereby inspecting the clogging state inside the trunk gas pipe 2.

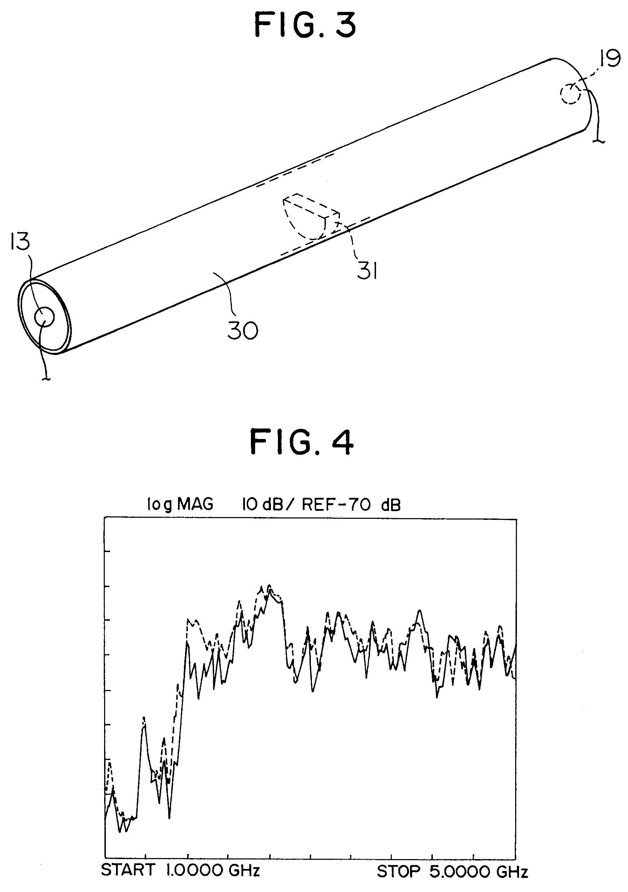

Experiments using the above inspecting method will be described below. Fig. 3 shows an experimental apparatus.

In this experiment, a gas pipe 30 which is called a 100A gas pipe having an inner diameter of about 105 mm was used. The gas pipe 30 had a length of about 150 cm. The antennas 13 and 19 of the transmitter and the receiver were respectively connected to the two ends of the pipe and located slightly inside the pipe. An electric wave having the frequency continuously changed in the range of 1.0 GHz to 5.0 GHz was transmitted, and an obstacle 31 was disposed at the center of the interior of the pipe. The obstacle 31 had a shape constituted by a partially notched circular thick plate having an outer diameter almost equal to the inner diameter of the gas pipe 30. The shape and area of this notched portion are varied to change the clogging state of the gas pipe 30 by the obstacle 31. Furthermore, an aluminum foil was wrapped on the surface of the obstacle 31.

More specifically, the following five types of experiments were performed. As a comparative experiment, the obstacle 31 was not located inside the gas pipe 30, an electric wave was transmitted from the transmitter, and the transmitted electric wave was received by the antenna 19 of the receiver opposing the transmitter. In addition, an obstacle 31 having a shape to cover 1/2 the sectional area of the gas pipe 30 was inserted into the gas pipe 30, and the antenna 19 received the electric wave in the same manner as in the comparative experiment (Experiment 1). An obstacle 31 covering 2/3 the sectional area of the gas pipe 30 was inserted into the gas pipe 30, and the antenna 19 received the electric wave in the same manner as in the comparative experiment (Experiment 2). An obstacle 31 covering the entire sectional area of the gas pipe 30 was inserted into the gas pipe 30, and the antenna 19 received the electric wave in the same manner as in the comparative experiment (Experiment 3). Water was poured inside the gas pipe 30, and the antenna 19 received the electric wave in the same manner as in the comparative experiment (Experiment 4). In Experiment 4, water was poured into a PET resin container having a sectional area equal to that of the gas pipe 30, and the container was inserted into the gas pipe 30. The results of Experiments 1 to 4 are shown in Figs. 4 to 7, and the results of the comparative experiment are represented by dotted lines in the graphs.

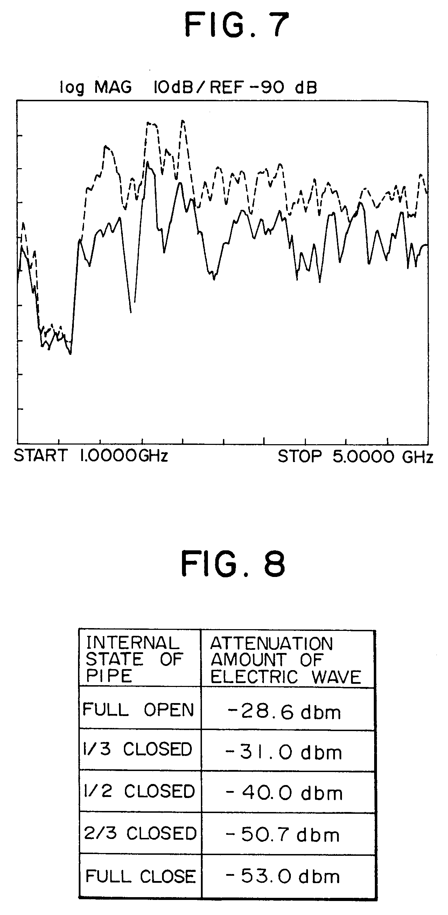

Experiment 6 was performed under the same conditions as described above except that the frequency was set at 2.5 GHz, and 1/3 of the gas pipe 30 was closed. The results of Experiment 6 are shown in Fig. 8. From these results, a criterion for judging that a foreign substance exists inthe pipe is an attenuation amount of -35 dbm or less.

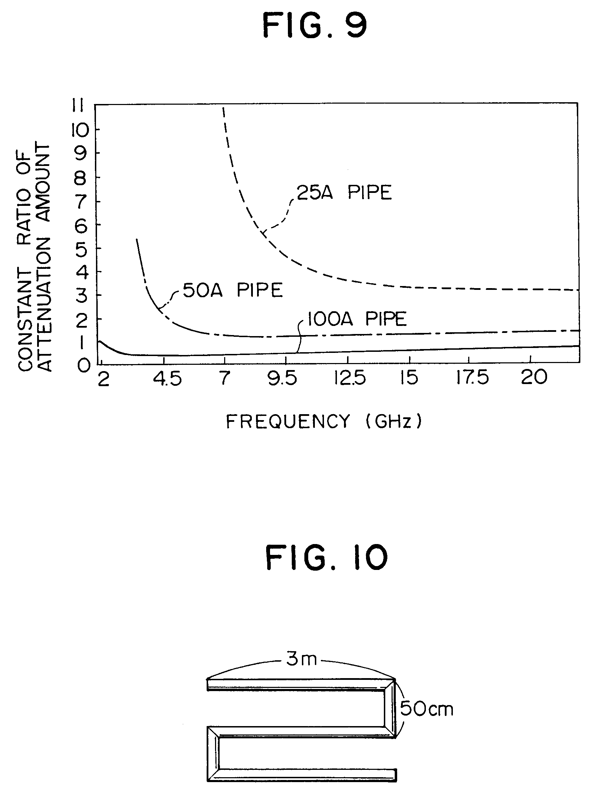

Furthermore, Fig. 9 shows attenuation constants. The graph shows an attenuation constant ratio at each frequency when the attenuation constant of the 100A pipe at 2 GHz is set to be 1, and the attenuation constant ratios of the 50A and 25A pipes, respectively. Therefore, when the attenuation constant of the 100A pipe at 2 GHz is 0.4 dB/m, differences in each pipe at the respective frequencies and differences between the attenuation constants in different inner diameters of the pipes are obtained from Fig. 9, and an attenuation amount for correction is obtained after the attenuation constant is corrected.

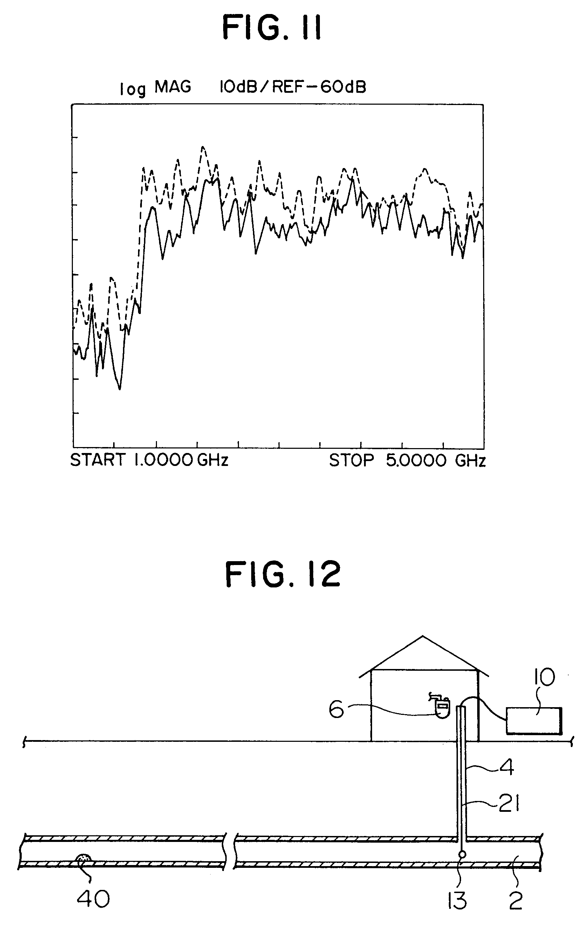

In addition in Experiment 7, a transmitter and a receiver were respectively set at the two ends of each of a 100A pipe having a length of 1 m, and a bent pipe which is obtained by alternately connecting 100A pipes each having a length of 3 m and 100A pipes each having a length of 50 cm at a right angle, to receive an electric wave. The results are shown in Fig. 11 (the result of the 100A pipe having a length of 1 m is represented by a dotted line). From those results, although a pipe having many bent portions is used, the attenuation amount of electric wave is apparently small.

As has been described above, according to the first example, each of the antennas 13 and 19 of the transmitter 12 and the receiver 14 is inserted from one end of a corresponding one of the domestic gas pipes 4 as the mounting portions of the two domestic gas-meters 6 spaced apart from each other and are passed to the trunk gas pipe 2 as a an inspection target. When the attenuation amount of the electric wave transmitted from the transmitter 12 is measured, the clogging state of the trunk gas pipe 12 between the transmission antenna 13 and the reception antenna 19 can be accurately inspected. In addition, the inspection distance can be increased because an electric wave is used. The trunk gas pipe 2 having a large length can be inspected by a smaller number of inspection cycles. Even if the trunk gas pipe 2 is complicatedly bent, the electric wave has a small attenuation amount to facilitate accurate inspection.

The above embodiment has exemplified a gas pipe as a target object. However, the inspecting method of the present invention is not limited to an application to the gas pipe. In addition, the antenna 13 or the like need not be inserted from the connection pipe of the corresponding gas-meter 6.

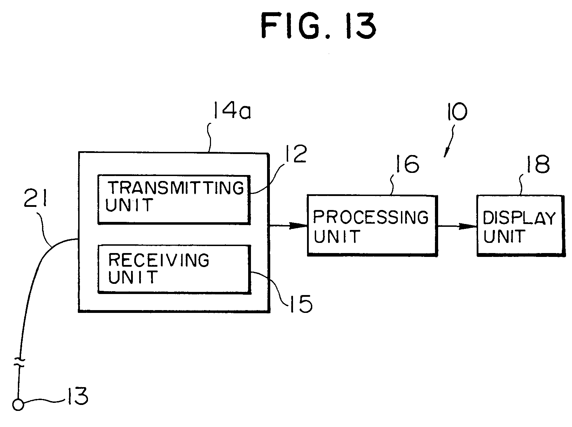

The second example of the present invention will be described with reference to Figs. 12 and 13.

An example of an inspecting apparatus used in the second example is illustrated in Fig. 13. An inspecting apparatus 10 comprises a transceiver 14a obtained by integrally arranging a transmission unit 12 and a reception unit 15 for an electric wave, a processing unit 16, and a display unit 18. The transmission unit 12 of the transceiver 14a can transmit an electric wave having a frequency on the order of GHz. A transmission/reception antenna 13 is mounted at the distal end of a lead wire 21 connected to the transceiver 14a. The antenna 13 is also connected to the reception unit 15, and receives an electric wave transmitted from the transmission unit 12 and reflected. The corresponding signal is amplified, and the amplified signal is sent to the processing unit 16.

The processing unit 16 compares the electric wave transmitted from the transmission unit 12 with the electric wave received by the reception unit 15 and measures a time interval between the transmission and reception of the electric wave. The processing unit 16 divides this time interval into 1/2 and multiplies the resultant value with the velocity of light to calculate a distance to an obstacle. The obtained distance is sent to the display unit 18, and this value is displayed on the display unit 18.

Inspection procedures will be described below. A gas-meter 6 near a target portion to be inspected is selected. A domestic gas pipe 4 is disconnected from the gas-meter 6. The antenna 13 of the transceiver 14a is inserted from an opening of the removed domestic gas pipe 4 and is passed until the antenna 13 reaches the interior of a trunk gas pipe 2. This operation may be performed after or before gas supply is interrupted. If gas supply is not interrupted during the inspection, the opening of the domestic gas pipe 4 is sealed to prevent gas leakage.

In this manner, when the antenna 13 of the transceiver 14a is located near the target portion to be inspected of the trunk gas pipe 2, an electric wave having a frequency higher than a value obtained by relation: $\text{f=c/1.706d}$ (where f is a frequency, c is the velocity of light, and d is the inner diameter of a pipe to be inspected) is transmitted from the transmitter 12. For example, if the trunk gas pipe 2 is a 100A pipe having an inner diameter of about 105 mm, the electric wave has a frequency of 1.67 GHz or more. The electric wave having a frequency equal to or higher than the frequency obtained by the above relation has a characteristic for allowing the electric wave to propagate with minimum attenuation in a pipe having an inner diameter substituted in the relation.

Immediately after an electric wave having a predetermined frequency is transmitted from the transmission unit 12, the reception unit 15 is set in a receivable state, and can receive the reflected wave. The reception unit 15 may be set in a normally receivable state. The electric wave collides against an obstacle 40 and is reflected therefrom, and the reflected electric wave returns through the pipe and is received by the reception unit 15 through the antenna 13. After the received electric wave is amplified, the amplified electric wave is sent to the processing unit 16. The corresponding signals are binarized such that a signal having a higher level than a given level is set to "1", and a signal having a lower level than the given level is set to "0". The resultant value is compared with the electric wave transmitted from the transmission unit 12 to detect a lapse of time between transmission and reception. A distance to the obstacle 40 is calculated from this lapse of time, and the resultant value is displayed on the display unit 18.

When the reflected wave is not observed, it is judged that the obstacle 40 does not exist within the range where the electric wave can reach and return. Assume that the antenna 13 is located at the intermediate position in the pipe, and that the electric wave spreads inside the pipe in both directions. In this case if the obstacle 40 is perceived, it cannot be judged a direction along which the obstacle 40 exists. The antenna 13 is slightly shifted to inspect an obstacle again. If a distance to the obstacle 40 becomes shorter, it is determined that the obstacle 40 exists on the side where the antenna 13 has been moved, and if a distance to the obstacle 40 becomes longer, it is determined that the obstacle 40 exists on the opposite side.

As has been described above, according to this embodiment of the present invention, the antenna 13 of the transceiver 14a is inserted from the mounting portion of the domestic gas-meter 6 and passed to the trunk pipe 2 as an inspection target. Then, a reflection time between transmission of the electric wave from the transmission unit 12 and its reception is measured, thereby accurately inspecting the distance from the antenna 13 to the obstacle 40. In addition, the inspection distance can be increased because an electric wave is used. The trunk gas pipe 2 having a large length can be inspected by a smaller number of inspection cycles. Even if the trunk gas pipe 2 is complicatedly bent, the electric wave has a small attenuation amount to facilitate accurate inspection.

The above embodiment has exemplified a gas pipe as an inspection target. However, the inspecting apparatus of the present invention is not limited to an application to the gas pipe.

In addition, in the above embodiment, the antenna 13 or the like is inserted from the connection port of the corresponding gas-meter 6. However, insertion of the antenna 13 or the like is not limited to this method. The antenna may be inserted from another location capable of insertion upon proper selection.

The pipes consist of electrically conductive material, preferably of metal. Although the TE mode is used in the disclosed embodiments, the TH mode can also be used.

## Claims

1. A method of inspecting an abnormality occurring inside a pipe to be inspected, comprising the steps of transmitting an electric wave having a predetermined frequency from an antenna of a transmitter located at a predetermined position inside said pipe, receiving the transmitted electric wave by an antenna of a receiver located at a predetermined position inside said pipe, and discriminating a characteristic of the received electric wave.

2. A method according to claim 1, wherein the characteristic of the received electric wave to be discriminated is an intensity of the electric wave, an attenuation amount is detected by comparing an intensity of the receivedelectric wave with an intensity of the transmitted electric wave, and it is judged that an abnormality which constricts an inner diameter of said pipe exists inside saidpipe when the attenuation amount of the received electric wave becomes more than a predetermined amount.

3. A method according to claim 2, wherein the transmitted electric wave is received by said antenna of said receiver spaced apart from said antenna of said transmitter by a predetermined distance inside said pipe.

4. A method according to claim 2, wherein said attenuation amount of the received electric wave is corrected by an attenuation due to a distance between said antenna of said transmitter and said antenna of said receiver.

5. A method according to claim 1, wherein the characteristic of the received electric wave to be discriminated is a time required to reflect the transmitted electric wave which is received by said receiver, and a time interval between transmission of the electric wave and reception of the reflected electric wave is measured so as to judge the abnormality occurring inside said pipe and detect a position where the abnormality has occured.

6. A method according to claim 5, wherein the transmitted electric wave is received by an antenna of transceiver having functions of said transmitter and said receiver.

7. A method according to claim 5, wherein the transmission of the electric wave and the reception of the reflected electric wave are performed at least twice at different positions, respectively, and a time interval related to each of the reflected electric waves of the second and subsequent times is compared with a time interval related to the reflected electric wave of a first time to judge an abnormality occurrence direction.

8. A method of inspecting an abnormality occurring inside a pipe to be inspected, comprising the steps of transmitting an electric wave having a predetermined frequency from an antenna of a transmitter located inside said pipe, receiving the transmitted electric wave by an antenna of a receiver located at a position spaced apart from said transmitter by a predetermined distance, comparing an intensity of the received electric wave with an intensity of the electric wave transmitted from said transmitter, and judging that an abnormality which constricts an inner diameter of said pipe exists inside said pipe when the attenuation amount of the received electric wave becomes more than a predetermined amount.

9. An apparatus for inspecting an abnormality occurring inside a pipe to be inspected, including a transmitter for transmitting an electric wave having a predetermined frequency from an antenna located inside said pipe, a receiver for receiving the transmitted electric wave by an antenna located at a position spaced apart from said transmitter by a predetermined distance inside said pipe, an amplifier for amplifying the received electric wave, a processing unit for comparing an intensity of the received electric wave with an intensity of the transmitted electric wave and calculating an attenuation amount of the received electric wave, a distance input unit for inputting data of a distance to said processing unit so as to correct said attenuation amount by an attenuation due to the distance between said antenna of said transmitter and said antenna of said receiver, and a display unit for displaying the intensity of the received electric wave.

10. An apparatus for inspecting an abnormality occurring inside a pipe to be inspected, including a transceiver for transmitting electric wave having a predetermined frequency inside said pipe and receiving the electric wave reflected by an obstacle existing inside said pipe, and a measuring unit for measuring a time interval between transmission of the electric wave and reception of the reflected electric wave.
